# EUROPEAN PATENT APPLICATION

(11) **EP 1 882 575 A1**
(43) Date of publication of application: **30.01.2008**
(21) Application number: 06746542.7
(22) Date of filing: 17.05.2006
(51) Int. Cl.: B29C 45/26, B29C 33/38, G11B 7/26, B29L 17/00

(54) **DISC-MOLDING MOLD, METHOD FOR MANUFACTURING THE SAME, AND MOLD PART**

(30) Priority: 19.05.2005 JP 2005146430
(71) Applicant: SUMITOMO HEAVY INDUSTRIES, LTD., Shinagawa-ku, Tokyo 141-8686 (JP); SEIKOH GIKEN CO., LTD., Matsudo-shi, Chiba 270-2214 (JP)
(72) Inventor: GOTO, Yoshiyuki c/o SEIKOH GIKEN CO., LTD., Chiba 2702214 (JP); SHIBUTANI, Yuji c/o SEIKOH GIKEN CO., LTD., Chiba 2702214 (JP); INADA, Yuichi c/o SUMITOMO HEAVY INDUSTRIES, LTD., Chiba-shi, Chiba 2630001 (JP)
(74) Representative: Wagner & Geyer
(86) International application number: PCT/JP2006/309839
(87) International publication number: WO 2006/123703

(57) **Abstract**

An object is to improve the wear resistance of a mold part and improve accuracy of disc substrates. A disc-molding mold comprises a first mold including a first support plate and a first mirror-surface disc attached to the first support plate; and a second mold including a second support plate and a second mirror-surface disc attached to the second support plate. A sliding surface of a mold part disposed on one of the first and second molds is treated by means of low-temperature nitriding. In this case, since the mold part is treated by means of low-temperature nitriding, the wear resistance of the mold part can be improved. In addition, since the treatment temperature is low, even when low-temperature nitriding is performed on a mold part which is complicated in shape, the mold part does not deform, and its dimensional variation can be decreased.

## Description

### TECHNICAL FIELD

The present invention relates to a disc-molding mold, a method for manufacturing the same, and a mold part.

### BACKGROUND ART

Conventionally, in a molding machine, such as an injection molding machine for molding disc substrates, resin melted within a heating cylinder is charged into a cavity in a disc-molding mold, and is then cooled and solidified in the cavity so as to obtain a disc substrate.

For such a molding process, the above-mentioned injection molding machine includes the disc-molding mold consisting of a stationary-side mold assembly and a movable-side mold assembly; an injection apparatus for charging resin into a cavity; and a mold-clamping apparatus for bringing the movable-side mold assembly into contact with the stationary-side mold assembly and separating the movable-side mold assembly from the stationary-side mold assembly. The mold-clamping apparatus is operated so as to advance and retract the movable-side mold assembly to thereby close, clamp, and open the disc-molding mold. When the mold is clamped, a cavity is formed between a disc plate of the stationary-side mold assembly and a disc plate of the movable-side mold assembly.

The injection apparatus includes a heating cylinder; an injection nozzle attached to a front end of the heating cylinder; and a screw disposed in the heating cylinder so that the screw can rotate and can advance and retract.

In a metering step, the screw is rotated, whereby resin is melted and stored in front of the screw, and the screw is retreated accordingly. During this period, the disc-molding mold is closed and clamped. Subsequently, in an injection step, the screw is advanced, whereby the resin accumulated in front of the screw is injected from the injection nozzle and charged into the cavity. In a cooling step, the resin in the cavity is cooled, and hole punching is performed, whereby a disc substrate is completed. Subsequently, the disc-molding mold is opened, and the disc substrate is removed therefrom.

Notably, a stamper for forming fine projections on an information surface of the disc substrate is attached to the stationary disc plate, and a cavity ring for forming the outer circumferential edge of the disc substrate is attached to the movable disc plate, whereby the outer circumferential edge of the cavity is defined by the cavity ring.

Incidentally, each time molding is performed, the cavity ring comes into contact with a butt ring provided on the stationary-side mold assembly and is caused to slide. In view of the foregoing, the surface of the cavity ring may be subjected to nitriding in order to improve the wear resistance of the cavity ring.

### DISCLOSURE OF THE INVENTION

### PROBLEMS TO BE SOLVED BY THE INVENTION

However, in the case of the above-described conventional disc-molding mold, nitriding is generally performed in a high temperature range of 530 to 570°C. According, when nitriding is performed on a mold part, such as a cavity ring, which is thin and complicated in shape, the cavity ring or the like deforms, and its dimensional variation increases. Accordingly, accuracy of molded disc substrates decreases.

An object of the present invention is to solve the above-mentioned problem in the conventional disc-molding mold and to provide a disc-molding mold which can improve the wear resistance of a mold part and can improve accuracy of disc substrates, as well as a method for manufacturing the same, and a mold part.

### MEANS FOR SOLVING THE PROBLEMS

To achieve the above object, a disc-molding mold of the present invention comprises a first mold including a first support plate and a first mirror-surface disc attached to the first support plate; and a second mold including a second support plate and a second mirror-surface disc attached to the second support plate.

A sliding surface of a mold part disposed on one of the first and second molds is treated by means of low-temperature nitriding.

### EFFECTS OF THE INVENTION

According to the present invention, a disc-molding mold comprises a first mold including a first support plate and a first mirror-surface disc attached to the first support plate; and a second mold including a second support plate and a second mirror-surface disc attached to the second support plate.

A sliding surface of a mold part disposed on one of the first and second molds is treated by means of low-temperature nitriding.

In this case, since the mold part is treated by means of low-temperature nitriding, the wear resistance of the mold part can be improved. In addition, since the treatment temperature is low, even when low-temperature nitriding is performed on a mold part which is complicated in shape, the mold part does not deform, and its dimensional variation can be decreased. As a result, accuracy of disc substrates can be improved.

### BRIEF DESCRIPTION OF THE DRAWINGS

FIG. 1 is a sectional view of a disc-molding mold according to an embodiment of the present invention.
FIG. 2 is a graph showing the relation between treatment temperature and dimensional variation of a cavity ring in the embodiment of the present invention.

### DESCRIPTION OF SYMBOLS

- 12, 32:: mold assembly
- 15:: base plate
- 16, 36:: disc plate
- 18:: butt ring
- 35:: base plate
- 37:: cavity ring
- 40:: intermediate plate

### BEST MODE FOR CARRYING OUT THE INVENTION

An embodiment of the present invention will next be described in detail with reference to the drawings. Notably, in this case, an injection molding machine, which is an example molding machine, will be described.

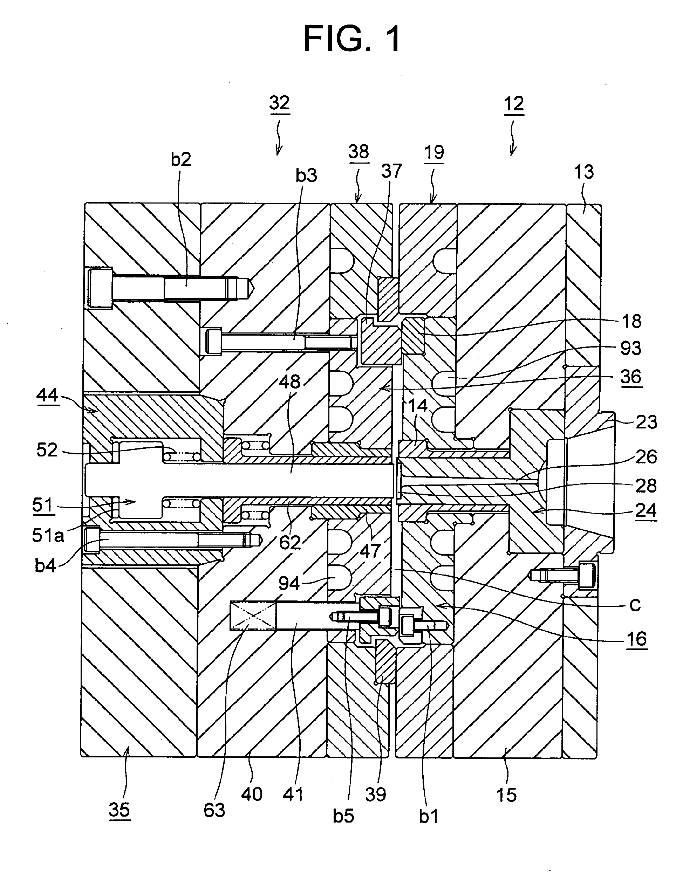

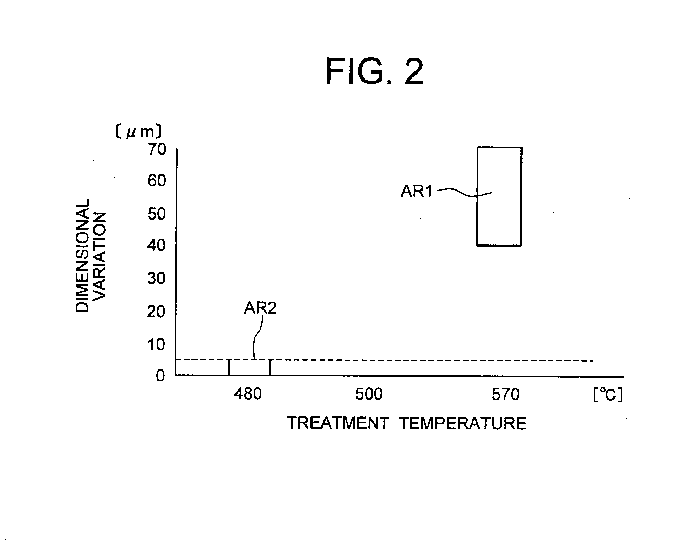

FIG. 1 is a sectional view of a disc-molding mold according to the embodiment of the present invention. FIG. 2 is a graph showing the relation between treatment temperature and dimensional variation of a cavity ring in the embodiment of the present invention. In FIG. 2, the horizontal axis represents treatment temperature, and the vertical axis represents dimensional variation.

In these drawings, reference numeral 12 denotes a stationary-side mold assembly (first mold) attached to an unillustrated stationary platen via an attachment plate 13. The mold assembly 12 includes a base plate (first support plate) 15; a disc plate (first mirror-surface disc) 16 attached to the base plate 15; a locating ring 23 disposed within in the attachment plate 13 in such a manner as to face the stationary platen and adapted to position the base plate 15 with respect to the stationary platen; and a sprue bush 24 disposed within the base plate 15 to be adjacent to the locating ring 23. A die 28 is formed at the front end of the sprue bush 24 so that the die faces a cavity C. A sprue 26 is formed in the sprue bush 24 and communicates with the die 28. Resin (molding material) injected from an injection nozzle of an unillustrated injection apparatus passes through the sprue 26. Notably, the injection apparatus includes an unillustrated heating cylinder; an injection nozzle attached to the front end of the heating cylinder; and a screw disposed in the heating cylinder so that the screw can rotate and can advance and retract.

An unillustrated stamper for forming fine projections on the information surface of an unillustrated disc substrate (molded product) is attached to the disc plate 16. A stamper-holding bush 14 for holding an inner circumferential edge of the stamper is disposed radially outward a front half portion of the sprue bush 24. Notably, an unillustrated air blow bush and the like are also disposed in the mold assembly 12.

An annular butt ring 18 is attached to an outer circumferential edge of the disc plate 16 by use of bolts b1. An annular first peripheral ring 19 is disposed radially outward the disc plate 16 and the butt ring 18 and attached to the base plate 15. The stamper-holding bush 14, the disc plate 16, the butt ring 18, the first peripheral ring 19, the air blow bush, etc. consist mold parts of the mold assembly 12.

Meanwhile, reference numeral 32 denotes a movable-side mold assembly (second mold) attached to an unillustrated movable platen by use of unillustrated bolts. The mold assembly 32 includes a base plate 35; an intermediate plate 40 attached to the base plate 35 by use of bolts b2; a disc plate (second mirror-surface disc) 36 attached to the intermediate plate 40 by use of bolts b3; a cylinder (surrounding member) 44 which is disposed within the base plate 35 in such a manner as to face the movable platen and which is attached to the intermediate plate 40 by use of bolts b4; and a cut punch (punching member) 48 which is advanced and retreated along the cylinder 44 and which has a shape corresponding to the die 28. Notably, the base plate 35 and the intermediate plate 40 constitute a second support plate.

An annular cavity ring 37 is disposed along an outer circumferential edge of the disc plate 36 and in opposition to the butt ring 18 such that the cavity ring 37 can move in relation to the disc plate 36. An annular second peripheral ring 38 is disposed radially outward the disc plate 36 and the cavity ring 37 and in opposition to the first peripheral ring 19 and is attached to the intermediate plate 40. The cavity ring 37 is attached to a rod 41 by use of bolts b5 such that it is disposed movably, via the rods 41, in relation to the intermediate plate 40. A spring (first urging member) 63 comes into contact with the rod 41 and urges the rod 41 and the cavity ring 37 toward the mold assembly 12. Reference numeral 39 denotes a cavity ring retainer attached to the second peripheral ring 38 by use of unillustrated bolts. The cavity ring retainer 39 is engaged with an outer circumferential edge of the cavity ring 37. The cavity ring 37 projects from the front end surface of the disc plate 36. The inner circumferential surface of the cavity ring 37 forms the outer circumferential edge of a disc substrate.

A flange 51 formed integrally with the cut punch 48 is disposed within the cylinder 44 such that it can be advanced and retreated. A rear end 51a of the flange 51 is received by the cylinder 44. Further, a cut-punch return spring (second urging member) 52 is disposed ahead of the flange 51. The cut-punch return spring 52 urges the flange 51 rearward.

Notably, the mold assemblies 12 and 32 constitute a disc-molding mold; and an unillustrated mold-clamping apparatus is disposed in order to bring the mold assembly 32 into contact with the mold assembly 12 and separate the mold assembly 32 away from the mold assembly 12. The mold assembly 32 can be advanced and retreated through drive of a mold-clamping cylinder (drive section for mold clamping) of the mold-clamping apparatus, whereby the disc-molding mold can be closed, clamped, and opened. When the disc-molding mold is clamped, the above-described cavity C is formed between the disc plates 16 and 36.

Further, when the disc-molding mold is clamped, the cut punch 48 is advanced through drive of an unillustrated drive cylinder (drive section for punching). Thus, the front end of the cut punch 48 enters the interior of the die 28. As a result, a hole can be formed in the resin within the cavity C. Notably, an ejector bush 62 for ejecting a disc substrate is disposed radially outward a front half portion of the cut punch 48. In addition, an air blow bush 47 for blowing compressed air against the disc substrate to thereby release the disc substrate from the disc plate 36 is disposed radially outward the ejector bush 62. Moreover, an unillustrated ejector pin and the like component are disposed in the mold assembly 32. Notably, the disc plate 36, the cavity ring 37, the second peripheral ring 38, the rod 41, the air blow bush 47, the cut punch 48, the ejector bush 62, etc. consist mold parts of the mold assembly 32.

First and second temperature control passages 93 and 94 are formed in the disc plates 16 and 36, respectively. A temperature control medium, such as water, oil, or air, is caused to flow through the first and second temperature control passages 93 and 94, to thereby cool the disc plates 16 and 36.

When the resin is charged into the cavity C, a very small clearance is formed in the axial direction between the cavity ring 37 and the stamper in order to allow air to escape from the cavity C.

In a metering step, the screw is rotated, whereby resin is melted and accumulated in front of the screw, and the screw is retreated accordingly. During this period, the disc-molding mold is closed and clamped. Subsequently, in an injection step, the screw is advanced, whereby the resin accumulated in front of the screw is injected from the injection nozzle and charged into the cavity C. In a cooling step, the resin in the cavity C is cooled, and hole punching is performed, whereby a disc substrate is completed. Subsequently, the mold is opened, and the disc substrate is removed.

Incidentally, the cavity ring 37 is accommodated in an annular groove formed by the disc plate 36 and the second peripheral ring 38 such that the cavity ring 37 can move in the axial direction, and is urged by the spring 63 toward the mold assembly 12. Accordingly, when the cavity ring 37 comes into contact with the butt ring 18 as a result of mold closing, after that point in time, the cavity ring 37 is retreated against the urging force of the spring 63. When the cavity ring 37 separates from the butt ring 18 as a result of mold opening, the cavity ring 37 is advanced by the urging force of the spring 63.

Further, when the pressure within the cavity C (mold internal pressure) increases as a result of charging of the resin into the cavity C of the clamped mold, a clearance of about 100 to 300 µm is formed between the disc plates 16 and 36 at the parting surface between the disc plates 16 and 36. Subsequently, in the cooling step, when the mold internal pressure decreases as the resin within the cavity C is cooled and retracts, the clearance between the disc plates 16 and 36 gradually decreases to zero.

In order to prevent the resin within the cavity C from flowing to the outside from the outer circumferential edge thereof as the result of formation of the clearance between the disc plates 16 and 36, to thereby prevent generation of lateral burrs, the cavity ring 37 moves toward the mold assembly 12 and maintains the state in which the cavity ring 37 is in contact with the mold assembly 12.

As described above, every time molding is performed, the cavity ring 37 comes into contact with the butt ring 18 and is caused to slide. Further, since the cavity ring 37 is caused to advance and retreat within the groove every time molding is performed, the outer and inner circumferential surfaces of the cavity ring 37 slide along the inner wall surface of the groove (the outer circumferential surface of the disc plate 36 and the inner circumferential surface of the second peripheral ring 38 within the groove).

In order to improve the wear resistance of the cavity ring 37, a surface of the cavity ring 37 (in the present embodiment, an contact surface of the cavity ring 37, which is a sliding surface that comes into contact with the butt ring 18 and slides thereon) is treated by means of low-temperature nitriding.

In the case where the cavity ring 37 is formed of an iron-based metallic material as in the present embodiment, the nitriding is performed in a bath of a molten-salt composition, which contains a cationic component (e.g., Na⁺ and K⁺) and an anionic component (e.g., CN⁻, CNO⁻, and CO₃²⁻), at a temperature not lower than 300°C but not higher than 500°C.

Notably, the lower the treatment temperature, the greater the likelihood that the bath composition changes (e.g., a portion of the molten-salt composition separates) and the greater the difficulty encountered in formation of a uniform nitride layer. The higher the treatment temperature, the greater the likelihood that the dimensions of the cavity ring change. Therefore, preferably, nitriding is performed for a predetermined time at a temperature not lower than 430°C but not higher than 480°C.

As shown in FIG. 2, when the nitriding treatment is performed at a temperature of about 570°C, the dimensions of the cavity ring 37 involve a variation of 40 to 70 µm as shown in an area AR1; and when the nitriding treatment is performed at a temperature of about 480°C, the dimensions of the cavity ring 37 involve only a small variation of 0 to 5 µm as shown in an area AR2. Accordingly, the dimensional variation of molded disc substrates can be brought into a range of 0 to 5 µm. In the present embodiment, the dimensional variations of the cavity ring 37 and variations of disc substrates are represented by surface roughness measured in accordance with a method for measuring center line average roughness, which is prescribed in JIS B0601.

Notably, a contact surface of the butt ring 18, which comes into contact with the cavity ring 37 and slides thereon, is also treated by means of low-temperature nitriding under the same treating conditions. Moreover, other sliding surfaces of the cavity ring 37; i.e., the outer and inner circumferential surfaces of the cavity ring 37, and the inner wall surface of the groove may be treated by low-temperature nitriding under the same treating conditions.

Since the sliding surface of the cavity ring 37 is treated by means of low-temperature nitriding, the wear resistance of the cavity ring 37 can be increased. Further, since the treatment temperature is low, even when low-temperature nitriding is performed on a mold part, such as the cavity ring 37, which is thin and is complicated in shape, the cavity ring 37 or a like mold part does not deform, and its dimensional variation can be decreased. As a result, accuracy of disc substrates can be improved. In particular, even when high-density disc substrates such as DVD-R are molded, sufficient accuracy can be attained.

Moreover, unlike coating, the above-mentioned nitriding involves surface modification. Therefore, wear resistance can be improved even inside the cavity ring 37 through treatment. In addition, as compared with the case where coating is performed, cost of treatment operation can be suppressed, and thus, overall cost can be reduced.

At the time of repair, unlike the case where coating was performed, it is not necessary to remove the coating layer and perform coating again.

In the present embodiment, the stamper and the butt ring 18 are disposed on the disk plate 16, and the cavity ring 37 is disposed on the disc plate 36. However, the embodiment may be modified in such a manner that the cavity ring is disposed on the disk plate 16, and the stamper and the butt ring are disposed on the disc plate 36.

The present invention is not limited to the above-described embodiments. Numerous modifications and variations of the present invention are possible in light of the spirit of the present invention, and they are not excluded from the scope of the present invention.

### INDUSTRIAL APPLICABILITY

The present invention can be applied to a disc-molding mold for molding disc substrates.

## Claims

1. A disc-molding mold **characterized by** comprising:
(a) a first mold including a first support plate and a first mirror-surface disc attached to the first support plate; and
(b) a second mold including a second support plate and a second mirror-surface disc attached to the second support plate, wherein
(c) a sliding surface of a mold part disposed on one of the first and second molds is treated by means of low-temperature nitriding.

2. A disc-molding mold according to claim 1, wherein the mold part has an annular shape.

3. A disc-molding mold according to claim 1, wherein the nitriding is performed at a temperature equal to or less than 500°C.

4. A disc-molding mold according to claim 1, wherein a sliding surface of a mold part disposed on the other of the first and second molds is treated by means of low-temperature nitriding.

5. A method for manufacturing a disc-molding mold comprising a first mold including a first support plate and a first mirror-surface disc attached to the first support plate; and a second mold including a second support plate and a second mirror-surface disc attached to the second support plate, the method being **characterized by** comprising:
treating a sliding surface of a mold part disposed on one of the first and second molds by means of low-temperature nitriding.

6. A mold part of a disc-molding mold comprising a first mold including a first support plate and a first mirror-surface disc attached to the first support plate; and a second mold including a second support plate and a second mirror-surface disc attached to the second support plate, the mold part being disposed on one of the first and second molds and **characterized in that** a sliding surface of the mold part is treated by means of low-temperature nitriding.
